(19) Europäisches Patentamt / European Patent Office / Office européen des brevets

(11) **EP 3 306 274 B1**

(12) **FASCICULE DE BREVET EUROPEEN**

(45) Date de publication et mention
de la délivrance du brevet:
**03.04.2019 Bulletin 2019/14**

(51) Int Cl.:
***G01D 5/244*** *(2006.01)*

(21) Numéro de dépôt: **17193666.9**

(22) Date de dépôt: **28.09.2017**

(54) **PROCEDE DE VALIDATION DE LA POSITION ANGULAIRE DU ROTOR D'UNE MACHINE ELECTRIQUE POUR VEHICULE AUTOMOBILE**

VALIDIERUNGSVERFAHREN DER WINKELPOSITION EINES ROTORS EINER ELEKTRISCHEN MASCHINE FÜR KRAFTFAHRZEUG

METHOD FOR VALIDATING THE ANGULAR POSITION OF THE ROTOR OF AN ELECTRIC MACHINE FOR A MOTOR VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(43) Date de publication de la demande:
**11.04.2018 Bulletin 2018/15**

(73) Titulaire: **RENAULT s.a.s.**
**92100 Boulogne-Billancourt (FR)**

(72) Inventeurs:
• **BAUMANN, THIBAUT**
**78350 JOUY EN JOSAS (FR)**
• **LETO, NICOLAS**
**92160 ANTONY (FR)**

(56) Documents cités:
**EP-A1- 2 980 536      US-A1- 2009 115 408**
**US-A1- 2009 167 296**

**Description**

L'invention a pour domaine technique la commande des machines électriques pour véhicule automobile, et plus particulièrement la détermination de la position angulaire du rotor des machines électriques dans de telles commandes.

Le contrôle de machines électriques de traction requiert généralement la détermination de la position angulaire du rotor.

Cette position angulaire étant critique, il est généralement admis de la déterminer de différentes manières, les résultats obtenus étant ensuite comparés afin d'être validés.

La position angulaire est ainsi d'une part déterminée par un codeur en fonction de signaux d'un capteur de position dit résolveur, puis mesurée par un moyen de calcul, et d'autre part déterminée par ce moyen de calcul en fonction des signaux de ce résolveur.

Les valeurs de la position angulaire ainsi obtenues sont ensuite comparées afin de valider la position angulaire du rotor. Si les résultats diffèrent, une fonction de sécurité est activée.

La validation de la position angulaire permet d'éviter un risque de pilotage de la machine électrique, pouvant conduire à un événement indésirable client potentiellement sécuritaire (acronyme EICPS), tel qu'une accélération ou un freinage intempestifs.

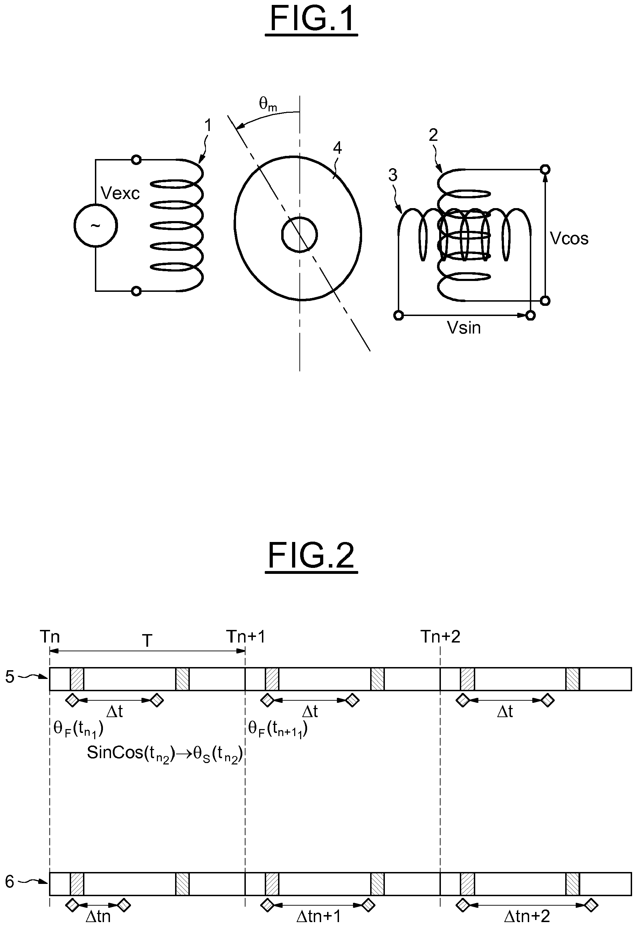

La figure 1 illustre un résolveur. Le résolveur fonctionne comme un transformateur électrique rotatif. Il est composé de trois bobines, une bobine primaire 1, et deux bobines secondaires 2,3 notées cos et sin. Le rotor 4 du résolveur agit comme un flux variable. Il est conçu de manière à ce que les amplitudes des bobines secondaires sin et cos soient proportionnelles aux sinus et cosinus de l'angle du rotor du résolveur par rapport au stator du résolveur. Le rotor du résolveur comprend le même nombre de paires de pôles que le rotor de la machine électrique. Dans ces conditions, les tensions de sortie des bobines secondaires sin et cos sont proportionnelles aux sinus et cosinus de l'angle électrique du rotor du moteur électrique par rapport à son stator.

Le signal d'excitation (généré par le système, et imposant la fréquence de calcul de la position pour le moyen de calcul en fonction des signaux sin et cos du résolveur) et les signaux sin et cos sont lus par le codeur, qui en déduit la position électrique du rotor (calculée à tout instant), et l'envoie au microcontrôleur par exemple via une liaison SPI (Sériai Peripheral Interface ; bus de données série synchrone).

Pour un tel système, deux architectures existent. Une architecture dite synchronisée, dans laquelle le signal d'excitation du résolveur est généré par le microcontrôleur et récupéré par le codeur.

Une architecture dite non synchronisée, dans laquelle le signal d'excitation du résolveur est généré par le codeur et récupéré par le microcontrôleur.

Dans les deux cas, le résolveur génère les signaux sin et cos. Le codeur envoie au microcontrôleur, via un bus, notamment SPI, la valeur de la position angulaire du rotor qu'il a calculé à partir des signaux sin et cos.

Le microcontrôleur récupère les signaux sin et cos du résolveur pour recalculer en interne la position angulaire du rotor. Ce calcul est redondant par rapport au calcul du codeur à des fins de sécurité.

Dans le cas de l'architecture synchronisée, le signal d'excitation (par exemple, dans notre cas (non restrictif), signal à une fréquence de 10kHz, période de 100μs) utilisé par le codeur et le résolveur est généré par le microcontrôleur. Le système d'exploitation du microcontrôleur fonctionne lui aussi à 10kHz. Ainsi il peut synchroniser précisément, dans chaque période de 100μs, les acquisitions (acquisition des signaux analogiques modulés SinCos fournis par le résolveur; acquisition de la position rotor démodulée par le codeur et transmise, dans notre cas, non restrictif, par liaison SPI au microcontrôleur) et les tâches de traitement (fonction sécuritaire de vérification de la position rotor et fonction applicative d'utilisation de la position rotor pour la régulation des courants du moteur électrique).

La figure 2 illustre un chronogramme de ces différents acquisitions et traitements pour une architecture synchronisée (référence 5) et non synchronisée (référence 6).

Dans ce chronogramme, on note :

$\theta_F(t_{n_1})$ : Acquisition par le microcontrôleur de la position angulaire, issue du codeur, à un premier instant $t_{n_1}$. Cette position est utilisée par le microcontrôleur pour les stratégies qui ont besoin de la position angulaire du rotor.

$SinCos(t_{n_2}) \rightarrow \theta_S(t_{n_2})$: Acquisition par le microcontrôleur des signaux des sin et cos, issus du résolveur, et du signal d'excitation, à un deuxième instant $t_{n_2}$ par le microcontrôleur ce qui permet de recalculer la position angulaire $\theta_S$. Ce deuxième instant $t_{n_2}$ est synchronisé avec le signal d'excitation. On dispose alors d'une deuxième valeur de position angulaire dans le microcontrôleur, indépendante de celle déterminée par le codeur, et permettant de déterminer si la position déterminée est valide, si les deux valeurs sont cohérentes, ou invalide sinon.

$\Delta t$ : l'écart de temps entre le premier instant $t_{n1}$, auquel a lieu la détermination de la position fonctionnelle $\theta_F(t_{n_1})$ et le deuxième instant $t_{n2}$, auquel a lieu l'acquisition des signaux $SinCos(t_{n2})$ permettant la détermination de la position sécuritaire $\theta_S(t_{n2})$.

On note par ailleurs N la vitesse de rotation de la machine électrique et T la période de fonctionnement du système d'exploitation temps réel fonctionnant dans le microcontrôleur.

On compare la valeur de la position angulaire $\theta_S(t_{n_2})$ déterminée par le microcontrôleur au deuxième instant à la position angulaire $\theta_F(t_{n_1})$ mesurée par l'intermédiaire du codeur au premier instant compensée par le produit de la vitesse de rotation de la machine électrique et du temps écoulé $\Delta t_n = t_{n_2} - t_{n_1}$ :

En d'autres termes, on détermine si l'écart entre la position angulaire $\theta_F(t_{n_1})$ issue du codeur au premier instant compensée par le produit de la vitesse de rotation de la machine électrique et du temps écoulé $\Delta t_n = t_{n_2} - t_{n_1}$ et la valeur de la position angulaire $\theta_S(t_{n_2})$ déterminée par le microcontrôleur au deuxième instant est inférieur à un seuil calibrable :

$$\left| \left( \theta_F\!\left(t_{n_1}\right) + \Delta t_n * N \right) - \theta_S\!\left(t_{n_2}\right) \right| \leq Seuil \qquad (Eq.1)$$

Si tel est le cas, la position angulaire est jugée valide.

Dans le cas où le fonctionnement est synchronisé, $\Delta t_n$ est toujours constant : $\Delta t_n = \Delta t < T$. On a un comportement déterministe pour lequel le paramètre de compensation permet de juger de la validité de la position angulaire.

Dans le cas où le fonctionnement est non synchronisé, $\Delta t_n$ n'est jamais constant. Dans certains cas, même avec une position angulaire valide, du fait d'un $\Delta t_n$ trop grand, le seuil peut être dépassé.

Il existe un besoin pour un procédé de validation de la valeur de la position angulaire du rotor dans le cas d'une architecture non synchronisée.

De l'état de la technique antérieure, on connaît les documents US2008309267 et US2008120055 ainsi que les documents US 6084376 et US 6389373 et EP2980536 qui ne permettent pas de sécuriser la valeur de la position angulaire du rotor.

L'invention a pour objet un procédé de validation de la position angulaire du rotor d'une machine électrique pour véhicule automobile muni d'un moyen de mesure des composantes de la position angulaire du rotor, d'une unité de commande embarquée et d'un moyen de calcul de la position angulaire,

dans lequel un signal d'excitation du moyen de mesure des composantes de la position angulaire du rotor est généré par le moyen de calcul de la position angulaire et récupéré par l'unité de commande embarquée de manière non synchronisée avec l'horloge interne de ladite unité de commande,

le moyen de mesure des composantes de la position angulaire du rotor étant apte à délivrer des signaux proportionnels au sinus et au cosinus de la position angulaire du rotor,

on détermine la position angulaire du rotor en fonction des composantes de la position angulaire du rotor et du signal d'excitation par l'intermédiaire de l'unité de commande embarquée et du moyen de calcul à un deuxième instant postérieur à un premier instant.

Le procédé comprend les étapes suivantes :

on détermine la position angulaire du rotor par l'intermédiaire du moyen de calcul de la position angulaire au premier instant,

on détermine la position angulaire du rotor par l'intermédiaire de l'unité de commande embarquée au deuxième instant, synchronisé avec le signal d'excitation,

on détermine la durée écoulée entre la détermination de la position angulaire du rotor par l'intermédiaire du moyen de calcul de la position angulaire au premier instant et la mesure des composantes de la position angulaire du rotor par l'unité de commande embarquée au deuxième instant,

on estime la valeur de la position angulaire qu'aurait déterminée le moyen de calcul de la position angulaire, au deuxième instant, synchronisé avec le signal d'excitation en fonction de la durée écoulée, de la vitesse de rotation de la machine électrique et de la valeur de la position angulaire du rotor déterminée par l'intermédiaire du moyen de calcul de la position angulaire au premier instant,

on détermine si l'écart entre la valeur estimée de la position angulaire qu'aurait déterminée le moyen de calcul de la position angulaire au deuxième instant et la position angulaire du rotor déterminée par l'intermédiaire de l'unité de commande embarquée au deuxième instant est inférieur à un seuil prédéterminé.

Si tel est le cas, on considère que la position angulaire est valide, sinon on considère que la position angulaire est invalide.

Pour déterminer la durée écoulée entre la détermination de la position angulaire du rotor par l'intermédiaire du moyen de calcul de la position angulaire et la mesure des signaux proportionnels au sinus et au cosinus de la position angulaire du rotor par l'unité de commande embarquée, on peut réaliser les étapes suivantes :

on génère un signal d'horloge à la même fréquence que le signal d'excitation issu du moyen de calcul de la position angulaire,
on détermine la durée écoulée entre le front montant ou descendant du signal d'horloge, correspondant au deuxième instant, et la détermination de la position angulaire du rotor par l'intermédiaire du moyen de calcul de la position angulaire correspondant au premier instant.

On peut estimer la valeur de la position angulaire qu'aurait déterminée le moyen de calcul de la position angulaire, au deuxième instant, comme étant égale au produit de la vitesse de rotation du rotor par la durée écoulée additionnée de la valeur de la position angulaire du rotor mesurée par l'intermédiaire du moyen de calcul de la position angulaire.

Le moyen de mesure des composantes de la position angulaire du rotor peut comprendre une bobine primaire d'excitation, deux bobines secondaires, et un rotor présentant le même nombre de pôles que le rotor de la machine électrique,
le rotor du moyen de mesure des composantes de la position angulaire du rotor étant solidaire mécaniquement du rotor de la machine électrique,
une première bobine secondaire étant apte à délivrer un signal proportionnel au sinus de la position angulaire du rotor du moyen de mesure des composantes de la position angulaire du rotor,
une deuxième bobine secondaire étant apte à délivrer un signal proportionnel au cosinus de la position angulaire du rotor du moyen de mesure des composantes de la position angulaire du rotor.

D'autres buts, caractéristiques et avantages de l'invention apparaîtront à la lecture de la description suivante, donnée uniquement à titre d'exemple non limitatif et faite en référence aux dessins annexés sur lesquels :

- la figure 1 illustre un résolveur selon l'état de la technique, et
- la figure 2 illustre un chronogramme des acquisitions et traitements pour des architectures synchronisée et non synchronisée de validation de la position angulaire.

Le procédé de validation est mis en oeuvre dans une unité de commande embarquée telle qu'un microcontrôleur. Il comprend une première étape au cours de laquelle on acquiert et on traite le signal d'excitation dans une unité de commande embarquée, afin qu'il puisse référencer temporellement la détermination de la position angulaire par l'unité de commande embarquée, qui réalise une démodulation des signaux sin cos, par rapport à son horloge interne.

Pour réaliser cela, on génère un signal d'horloge, par exemple de type signal carré, à la fréquence de 10kHz du moyen de calcul de la position angulaire à partir du signal d'excitation issu du moyen de calcul de la position angulaire, et d'un circuit comparateur.

Ce signal d'horloge est un événement exploitable par l'unité de commande embarquée, qui lui permet d'avoir une référence temporelle du moment de déclenchement de l'acquisition des signaux sin et cos.

Le procédé comprend une deuxième étape au cours de laquelle on utilise cette référence temporelle pour déterminer la durée écoulée entre la détermination de la position angulaire par le moyen de calcul de la position angulaire, et la mesure des signaux sin et cos issus du moyen de mesure des composantes de la position angulaire du rotor, tel qu'un résolveur, à partir desquels la position angulaire du rotor est recalculée par l'unité de commande embarquée, en réalisant une démodulation de ces signaux. Cette durée écoulée est ensuite utilisée pour estimer la valeur de la position angulaire qu'aurait déterminée le moyen de calcul de la position angulaire au moment de l'acquisition par l'unité de commande embarquée.

La vitesse instantanée, et l'intervalle de temps entre l'acquisition par le moyen de calcul de la position angulaire et l'acquisition par l'unité de commande embarquée permettent de compenser l'écart entre les deux positions angulaires du rotor mesurées.

Le calcul utilisé pour déterminer l'écart de position entre les deux instants respectivement de détermination et de mesure ($t_1$ : détermination par le moyen de calcul de la position angulaire ; $t_2$ : mesure par l'unité de commande embarquée) utilise l'approximation « vitesse de rotation constante entre ces deux instants, $\dot{\theta}(t)$ = *constante* » :

$$\Delta\theta_{approx} = \int_{t_1}^{t_2}\dot\theta(t).\,dt = \int_{t_1}^{t_2}\dot\theta(t_1).\,dt = \dot\theta(t_1).(t_2 - t_1) \qquad (Eq.\,2)$$

Les signaux d'excitation étant bruités, le signal d'horloge reconstitué peut présenter une incertitude de quelques microsecondes, ce qui correspond à une incertitude sur la position angulaire du rotor de l'ordre de quelques degrés.

Les contraintes de la stratégie existante d'acquisition des signaux Sin et Cos imposent d'avoir une incertitude sur le signal d'horloge inférieure à ¼ de période (25μs). Il faut donc avoir une bonne reconstitution du signal d'horloge.

Cette estimation de compensation de l'écart entre les deux positions angulaires du rotor mesurées suppose que la vitesse de rotation du rotor est constante pendant cet intervalle de temps. Dans le contexte d'utilisation de l'invention, c'est-à-dire dans le cadre de l'utilisation pour la commande d'un moteur électrique de traction, cet intervalle de temps ($t_2$-$t_1$) est de 200$\mu$s dans le pire des cas. Une variation trop rapide de la vitesse engendre une approximation de calcul trop imprécise. Mais la dynamique maximale du moteur limite les variations de la vitesse à une valeur $\ddot{\theta}$ max = 2500 tour par sec$^2$ = 2500*2$\pi$ rad/s$^2$

Le calcul exact de l'écart de position entre les deux instants de détermination et mesure est :

$$\Delta\theta_{exact} - \int_{t_1}^{t_2} \theta(t).dt - \int_{t_1}^{t_2}\left[\theta(t_1) + \int_{t_1}^{t_2}\dot{\theta}(t).dt\right].dt - \int_{t_1}^{t_2}\theta(t_1).dt$$
$$+ \iint_{t_1}^{t_2}\ddot{\theta}(t).dt.dt = \Delta\theta_{approx} + \iint_{t_1}^{t_2}\ddot{\theta}(t).dt.dt \qquad (Eq.\ 3)$$

L'erreur de position due à l'approximation « vitesse de rotation constante » est donc :

$$\Delta\theta_{exact} - \Delta\theta_{approx} = \iint_{t_1}^{t_2}\ddot{\theta}(t).dt.dt \qquad (Eq.\ 4)$$

En prenant le pire cas, $\ddot{\theta}(t) = \ddot{\theta}_{max}$ :

$$\Delta\theta_{exact} - \Delta\theta_{approx} \leq \ddot{\theta}_{max}\iint_{t_1}^{t_2} dt.dt \leq \ddot{\theta}_{max}(t_2 - t_1)^2 \qquad (Eq.\ 5)$$

L'erreur d'approximation angulaire est donc inférieure à

$$2500 * 2\pi * (200e^{-6})^2 = 3.1e^{-6} \text{ rad} \qquad (Eq.\ 6)$$

Elle est donc négligeable, et l'approximation est justifiée.

## Revendications

**1.** Procédé de validation de la position angulaire du rotor d'une machine électrique pour véhicule automobile muni d'un moyen de mesure des composantes de la position angulaire du rotor, d'une unité de commande embarquée et d'un moyen de calcul de la position angulaire, dans lequel un signal d'excitation du moyen de mesure des composantes de la position angulaire du rotor est généré par le moyen de calcul de la position angulaire et récupéré par l'unité de commande embarquée de manière non synchronisée avec l'horloge interne de ladite unité de commande,
le moyen de mesure des composantes de la position angulaire du rotor étant apte à délivrer des signaux proportionnels au sinus et au cosinus de la position angulaire du rotor,
on détermine la position angulaire du rotor en fonction des composantes de la position angulaire du rotor et du signal d'excitation par l'intermédiaire de l'unité de commande embarquée et du moyen de calcul à un deuxième instant, postérieur à un premier instant,
le procédé étant **caractérisé par le fait qu'**il comprend les étapes suivantes :

on détermine la position angulaire du rotor par l'intermédiaire du moyen de calcul de la position angulaire au premier instant,
on détermine la position angulaire du rotor par l'intermédiaire de l'unité de commande embarquée au deuxième instant, synchronisé avec le signal d'excitation,

on détermine la durée écoulée entre la détermination de la position angulaire du rotor par l'intermédiaire du moyen de calcul de la position angulaire au premier instant et une mesure des composantes de la position angulaire du rotor par l'unité de commande embarquée au deuxième instant,

on estime la valeur de la position angulaire qu'aurait déterminée le moyen de calcul de la position angulaire au deuxième instant, synchronisé avec le signal d'excitation, en fonction de la durée écoulée, de la vitesse de rotation de la machine électrique et de la valeur de la position angulaire du rotor déterminée par l'intermédiaire du moyen de calcul de la position angulaire au premier instant,

on détermine si l'écart entre la valeur estimée de la position angulaire qu'aurait déterminée le moyen de calcul de la position angulaire au deuxième instant et la position angulaire du rotor déterminée par l'intermédiaire de l'unité de commande embarquée au deuxième instant est inférieur à un seuil prédéterminé,

si tel est le cas, on considère que la position angulaire est valide, sinon on considère que la position angulaire est invalide.

2. Procédé selon la revendication précédente, dans lequel,

pour déterminer la durée écoulée entre la détermination de la position angulaire du rotor par l'intermédiaire du moyen de calcul de la position angulaire et la mesure des signaux proportionnels au sinus et au cosinus de la position angulaire du rotor par l'unité de commande embarquée, on réalise les étapes suivantes :

on génère un signal d'horloge à la même fréquence que le signal d'excitation issu du moyen de calcul de la position angulaire,

on détermine la durée écoulée entre le front montant ou descendant du signal d'horloge, correspondant au deuxième instant et la détermination de la position angulaire du rotor par l'intermédiaire du moyen de calcul de la position angulaire correspondant au premier instant.

3. Procédé selon l'une quelconque des revendications précédentes, dans lequel on estime la valeur de la position angulaire qu'aurait déterminée le moyen de calcul de la position angulaire au deuxième instant comme étant égale au produit de la vitesse de rotation du rotor par la durée écoulée additionnée de la valeur de la position angulaire du rotor déterminée par l'intermédiaire du moyen de calcul de la position angulaire.

4. Procédé selon l'une quelconque des revendications précédentes, dans lequel le moyen de mesure des composantes de la position angulaire du rotor comprend une bobine primaire d'excitation, deux bobines secondaires, et un rotor présentant le même nombre de pôles que le rotor de la machine électrique,

le rotor du moyen de mesure des composantes de la position angulaire du rotor étant solidaire mécaniquement du rotor de la machine électrique,

une première bobine secondaire étant apte à délivrer un signal proportionnel au sinus de la position angulaire du rotor du moyen de mesure des composantes de la position angulaire du rotor,

une deuxième bobine secondaire étant apte à délivrer un signal proportionnel au cosinus de la position angulaire du rotor du moyen de mesure des composantes de la position angulaire du rotor.

**Patentansprüche**

1. Verfahren zur Validierung der Winkelposition des Rotors einer elektrischen Maschine für ein Kraftfahrzeug, das mit einem Mittel zur Messung der Komponenten der Winkelposition des Rotors, einer Bordsteuereinheit und einem Mittel zur Berechnung der Winkelposition ausgestattet ist, wobei ein Signal zur Erregung des Mittels zur Messung der Komponenten der Winkelposition des Rotors von dem Mittel zur Berechnung der Winkelposition erzeugt und von der Bordsteuereinheit auf eine mit dem internen Taktgeber dieser Steuereinheit nicht synchronisierte Weise wiederhergestellt wird,

wobei das Mittel zur Messung der Komponenten der Winkelposition des Rotors dafür ausgelegt ist, Signale zu liefern, die zum Sinus und zum Cosinus der Winkelposition des Rotors proportional sind,

wobei die Winkelposition des Rotors in Abhängigkeit von den Komponenten der Winkelposition des Rotors und von dem Erregungssignal durch die Bordsteuereinheit und das Mittel zur Berechnung zu einem zweiten Zeitpunkt bestimmt wird, der später als ein erster Zeitpunkt ist,

wobei das Verfahren **dadurch gekennzeichnet ist, dass** es die folgenden Schritte umfasst:

es wird die Winkelposition des Rotors durch das Mittel zur Berechnung der Winkelposition zum ersten Zeitpunkt bestimmt,

es wird die Winkelposition des Rotors durch die Bordsteuereinheit zum zweiten Zeitpunkt bestimmt, der mit dem Erregungssignal synchronisiert ist,

es wird die Dauer bestimmt, die zwischen der Bestimmung der Winkelposition des Rotors durch das Mittel zur Berechnung der Winkelposition zum ersten Zeitpunkt und einer Messung der Komponenten der Winkelposition des Rotors durch die Bordsteuereinheit zum zweiten Zeitpunkt vergangen ist,

es wird der Wert der Winkelposition, den das Mittel zur Berechnung der Winkelposition zum zweiten Zeitpunkt, der mit dem Erregungssignal synchronisiert ist, bestimmt hätte, in Abhängigkeit von der vergangenen Dauer, der Drehzahl der elektrischen Maschine und dem Wert der Winkelposition des Rotors, der durch das Mittel zur Berechnung der Winkelposition zum ersten Zeitpunkt bestimmt wurde, geschätzt,

es wird bestimmt, ob die Abweichung zwischen dem geschätzten Wert der Winkelposition, den das Mittel zur Berechnung der Winkelposition zum zweiten Zeitpunkt bestimmt hätte, und der Winkelposition des Rotors, die durch Bordsteuereinheit zum zweiten Zeitpunkt bestimmt wurde, kleiner als ein vorbestimmter Schwellenwert ist, wenn dies der Fall ist, wird angenommen, dass die Winkelposition gültig ist, und andernfalls wird angenommen, dass die Winkelposition ungültig ist.

2. Verfahren nach dem vorhergehenden Anspruch, wobei zum Bestimmen der Dauer, die zwischen der Bestimmung der Winkelposition des Rotors durch das Mittel zur Berechnung der Winkelposition und der Messung der zum Sinus und zum Cosinus der Winkelposition des Rotors proportionalen Signale durch die Bordsteuereinheit vergangen ist, die folgenden Schritte ausgeführt werden:

es wird ein Taktsignal mit derselben Frequenz wie das von dem Mittel zur Berechnung der Winkelposition ausgegebene Erregungssignal erzeugt,

es wird die Dauer bestimmt, die zwischen der ansteigenden oder fallenden Flanke des Taktsignals, das dem zweiten Zeitpunkt entspricht, und der Bestimmung der Winkelposition des Rotors durch das Mittel zur Berechnung der Winkelposition, die dem ersten Zeitpunkt entspricht, vergangen ist.

3. Verfahren nach einem der vorhergehenden Ansprüche, wobei der Wert der Winkelposition, den das Mittel zur Berechnung der Winkelposition zum zweiten Zeitpunkt bestimmt hätte, als gleich dem Produkt der Drehzahl des Rotors mit der vergangenen Dauer zuzüglich des Wertes der Winkelposition des Rotors, der durch das Mittel zur Berechnung der Winkelposition bestimmt wurde, geschätzt wird.

4. Verfahren nach einem der vorhergehenden Ansprüche, wobei das Mittel zur Messung der Komponenten der Winkelposition des Rotors eine primäre Erregerspule, zwei Sekundärspulen und einen Rotor, der dieselbe Anzahl von Polen wie der Rotor der elektrischen Maschine aufweist, umfasst,

wobei der Rotor des Mittels zur Messung der Komponenten der Winkelposition des Rotors mit dem Rotor der elektrischen Maschine mechanisch fest verbunden ist,

wobei eine erste Sekundärspule dafür ausgelegt ist, ein Signal zu liefern, das zum Sinus der Winkelposition des Rotors des Mittels zur Messung der Komponenten der Winkelposition des Rotors proportional ist,

wobei eine zweite Sekundärspule dafür ausgelegt ist, ein Signal zu liefern, das zum Cosinus der Winkelposition des Rotors des Mittels zur Messung der Komponenten der Winkelposition des Rotors proportional ist.

**Claims**

1. Method for validating the angular position of the rotor of an electrical machine for a motor vehicle provided with a means for measuring the components of the angular position of the rotor, an on-board control unit and a means for calculating the angular position, in which an excitation signal of the means for measuring the components of the angular position of the rotor is generated by the means for calculating the angular position and retrieved by the on-board control unit in a non-synchronised manner with the internal clock of the control unit,

the means for measuring the components of the angular position of the rotor being capable of supplying signals proportional to the sine and the cosine of the angular position of the rotor,

the angular position of the rotor is determined in accordance with the components of the angular position of the rotor and the excitation signal via the on-board control unit and the calculation means at a second time, following a first time, the method being **characterised in that** it comprises the following steps:

the angular position of the rotor is determined via the means for calculating the angular position at the first time, the angular position of the rotor is determined via the on-board control unit at the second time, in a state synchronised with the excitation signal,

the time elapsed between the determination of the angular position of the rotor via the means for calculating the angular position at the first time and a measurement of the components of the angular position of the rotor by the on-board control unit at the second time is determined,

the value of the angular position which would have been determined by the means for calculating the angular position at the second time is estimated, in a state synchronised with the excitation signal, in accordance with the time elapsed, the rotation speed of the electric machine and the value of the angular position of the rotor determined via the means for calculating the angular position at the first time,

it is determined whether the deviation between the estimated value of the angular position which would have been determined by the means for calculating the angular position at the second time and the angular position of the rotor determined via the on-board control unit at the second time is less than a predetermined threshold,

if this is the case, it is considered that the angular position is valid, if not it is considered that the angular position is invalid.

2. Method according to the preceding claim, wherein,

in order to determine the time elapsed between the determination of the angular position of the rotor via the means for calculating the angular position and the measurement of the signals proportional to the sine and the cosine of the angular position of the rotor by the on-board control unit, the following steps are carried out:

a clock signal is generated at the same frequency as the excitation signal originating from the means for calculating the angular position,

the time elapsed between the rising or falling edge of the clock signal is determined, corresponding to the second time and the determination of the angular position of the rotor via the means for calculating the angular position corresponding to the first time.

3. Method according to either of the preceding claims, wherein the value of the angular position which would have been determined by the means for calculating the angular position at the second time is estimated as being equal to the product of the rotation speed of the rotor multiplied by the time elapsed added to the value of the angular position of the rotor determined via the means for calculating the angular position.

4. Method according to any one of the preceding claims, wherein the means for measuring the components of the angular position of the rotor comprises a primary excitation coil, two secondary coils and a rotor which has the same number of poles as the rotor of the electric machine,

the rotor of the means for measuring the components of the angular position of the rotor being fixedly joined mechanically to the rotor of the electric machine,

a first secondary coil being capable of supplying a signal which is proportional to the sine of the angular position of the rotor via the means for measuring the components of the angular position of the rotor,

a second secondary coil being capable of supplying a signal which is proportional to the cosine of the angular position of the rotor via the means for measuring the components of the angular position of the rotor.

## FIG.1

## FIG.2

**EP 3 306 274 B1**

**RÉFÉRENCES CITÉES DANS LA DESCRIPTION**

**Documents brevets cités dans la description**

- US 2008309267 A
- US 2008120055 A
- US 6084376 A
- US 6389373 B
- EP 2980536 A